(19) Europäisches Patentamt
European Patent Office
Office européen des brevets

(11) **EP 2 312 880 B1**

(12) **EUROPEAN PATENT SPECIFICATION**

(45) Date of publication and mention
of the grant of the patent:
**23.05.2012 Bulletin 2012/21**

(51) Int Cl.:
***H04W 16/10*** *(2009.01)*

(21) Application number: **09290780.7**

(22) Date of filing: **13.10.2009**

(54) **Method for allocating radio resources in a wireless cellular network**

Verfahren zur Zuweisung von Funkressourcen in einem drahtlosen zellularen Netzwerk

Procédé d'affectation de ressources radio dans un réseau cellulaire sans fil

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**20.04.2011 Bulletin 2011/16**

(73) Proprietor: **Alcatel Lucent**
**75007 Paris (FR)**

(72) Inventors:
• **Andrews, Daniel**
**P.O. Box 636**
**Murray Hill, NJ 07974-0636 (US)**
• **Gupta, Piyush**
**Murray Hill, N.J.**
**(US)**
• **Capdevielle, Véronique**
**91620 Nozay (FR)**
• **Feki, Afef**
**91620 Nozay (FR)**

(74) Representative: **Croonenbroek, Thomas Jakob**
**Cabinet Innovincia**
**11, avenue des Tilleuls**
**74200 Thonon-les-Bains (FR)**

(56) References cited:
**EP-A1- 1 786 221     EP-A2- 2 073 587**
**EP-A2- 2 086 274**

## Description

## BACKGROUND OF THE INVENTION

The present invention relates to the field of telecommunications and more specifically of radio resources allocation between the base stations of a network.

In order to cope with the increasing telecommunication traffic demand, the existing network of macro-cells has to be completed with micro-cells of shorter radius (small-cells, femto-cells...), especially in dense areas such as cities.

However, due to the limits of the radio spectrum of said telecommunications, the deployment of short radius cells in addition to the existing macro-cells raises the risk of harmful interferences leading to performance degradation.

Thus, the allocation of frequency bands appears to be a major issue to overcome in order to ensure a good quality of service.

The solutions of the state of the art refer to the use of carrier sense multiple access with collision avoidance (CSMA/CA) protocol or centralized frequency planning.

A method according to the prior art is disclosed in EP 1 786 221 A1.

Nevertheless, the centralized solution is not computationally feasible for high-density deployments required in future networks and the CSMA/CA protocol is limited to single carrier systems only and is therefore not adapted to the multiple frequency carriers required for optimizing network throughput.

## SUMMARY OF THE INVENTION

It is therefore an object of the present invention to provide a method allowing to reduce the interference in a network comprising different types of cells that can interfere.

Thus, the present invention refers to a method for allocating radio resources in a wireless cellular network comprising micro-cells wherein the base stations of the micro-cells select periodically the frequency bands in which they operate, said selection comprising at least two timing scale levels:

- a first timing scale level wherein, based on signal quality measurements achieved in the whole operating spectrum by at least one user equipment, a frequency carrier comprising a plurality of frequency blocks is selected for a period T1,
- a second timing scale level wherein, based on signal quality measurements achieved in the previously selected frequency carrier by at least one user equipment, at least one frequency block within said selected frequency carrier is selected for a period T2 shorter than T1.

According to another aspect of the invention, the signal quality measurements comprise interference level measurements.

According to a further aspect of the invention, the selected frequency bands correspond to the frequency bands having the lowest interference levels.

According to an additional aspect of the invention, the selection of frequency bands is based on a randomized process using occupation probabilities derived from signal quality measurements.

According to another aspect of the invention, the interference level measurements correspond to Signal to Interference plus Noise Ratio (SINR) measurements.

According to a further aspect of the invention, the selection of the frequency bands is achieved based on the mean value of the interference level measurements.

According to an additional aspect of the invention, the selection of the frequency bands is achieved based on the cumulative distribution function of the interference level measurements.

According to another aspect of the invention, the wireless cellular network also comprises macro-cells and the selection of frequency bands by the base stations of the micro-cells is weighted in order to give priority to macro-cell traffic.

According to a further aspect of the invention, the base station of a micro-cell can communicate with other base stations, said communication allowing the exchange of signal quality measurements between the communicating base stations.

According to an additional aspect of the invention, a new selection process can be triggered in case of performance degradation or in case of request from a neighbouring macro-cell.

According to another aspect of the invention, the size and/or the number of selected frequency blocks vary in function of signal quality measurements and/or traffic request.

According to a further aspect of the invention, in case of traffic saturation, the allocation of frequency blocks is time-shared between neighbouring base stations such that a base station accesses selected frequency blocks only part of the time.

According to another aspect of the invention, the wireless cellular network is a Long Term Evolution (LTE) network and signal quality measurements comprise Channel Quality Information (CQI) measurements.

The invention also refers to a micro-cell base station comprising means configured for:

- receiving and collecting signal quality measurements sent by at least one user equipment;
- selecting periodically the frequency bands in which said base station operates, said selection comprising at least two timing scale levels:
- a first timing scale level wherein, based on signal quality measurements achieved in the whole operating spectrum, a frequency carrier comprising a plurality of frequency blocks is selected for a period T1,

-  a second timing scale level wherein, based on signal quality measurements achieved in the previously selected frequency carrier, at least one frequency block within said selected frequency carrier is selected for a period T2 shorter than T1.

According to another embodiment of the invention, the micro-cell base station comprises means configured for exchanging information with other neighbouring base stations.

According to a further embodiment of the invention, said micro-cell base station comprises a X2 interface in order to communicate with other base stations of a Long Term Evolution (LTE) network.

## BRIEF DESCRIPTION OF THE DRAWINGS

FIG.1 is a diagram of an example of configuration of a mixed network comprising micro-cells and macro-cells;
FIG.2 is a diagram of an operating frequency spectrum and the distribution between the micro-cell frequency range and the macro-cell frequency range;
FIG.3 is a diagram of an example of cell organization;
FIG.4 is a diagram of an example of frequency carriers distribution along the operating frequency spectrum;
FIG.5 is a diagram of the carriers and blocks selection along the time.

## DETAILED DESCRIPTION OF THE INVENTION

As used herein, the term "frequency band" refers to a part of the frequency spectrum. Frequency bands may have different frequency widths.
As used herein, the term "frequency carrier" refers to a frequency band covering a wide band of the frequency spectrum such that said frequency carrier may be subdivided into a plurality of smaller frequency bands.
As used herein, the term "frequency block" refers to a small frequency band covering a small bandwidth of the frequency spectrum such that said block may correspond to an elementary unit of bandwidth.
As used herein, the term "micro-cell" refers to cells having a small covering area (for example a building or a flat) as opposed to a macro-cell.
As used herein, the term "small-cell" refers to micro-cells wherein the base station is capable of communication with other base stations and usually belonging to an operator.
As used herein, the term "femto-cell" refers to private micro-cells wherein the base station is usually installed by the user. Unlike small-cells, such femto-cells are not capable of communicating with other base stations.
The embodiments of the present invention refer to an autonomous distributed method allowing an adaptation of the allocation of frequencies for the base stations of the small size cells.

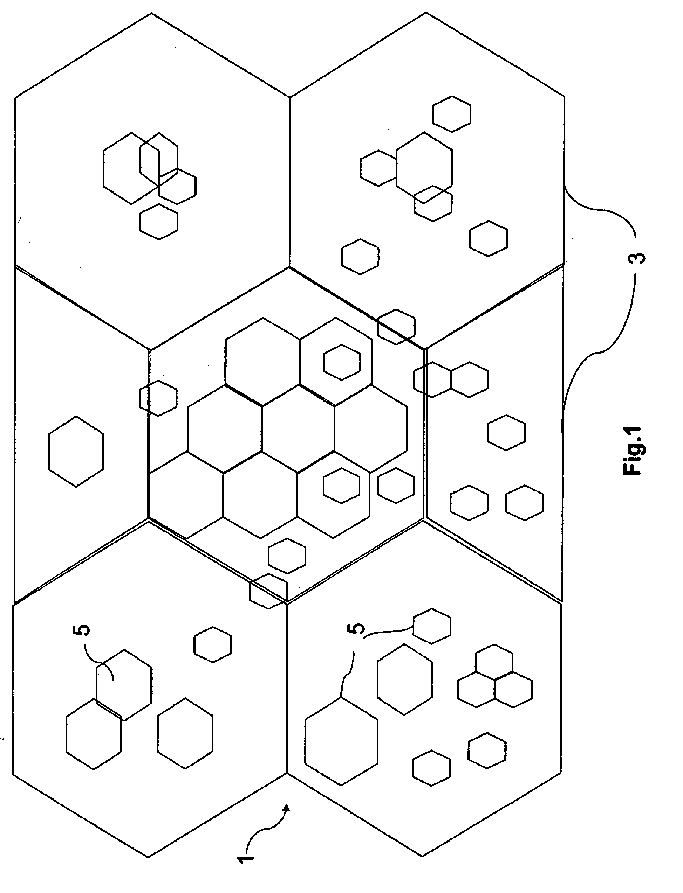

Fig.1 represents an example of cellular network 1 comprising macro-cells 3 and micro-cells 5. One can notice that several cells may cover the same area (for example at the edges of the cells or in micro-cells which are located inside a macro-cell area) so that interferences may occur if said cells use common frequencies for their communications with the user equipments.

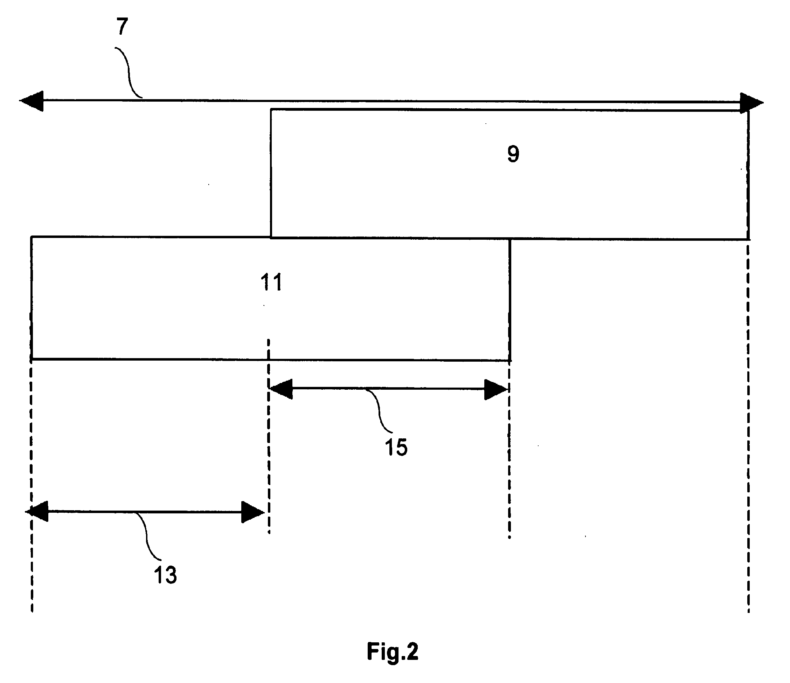

Fig.2 represents an example of distribution of the operating frequency spectrum 7 between the different types of cells. Said operating spectrum 7 comprises a macro-cell area 9 and a micro-cell area 11 which are partially overlapping. The micro-cell area 11 corresponding both to the small-cells and the femto-cells. Thus, the micro-cell area 11 can be divided into two parts:

-  a micro-exclusive part 13 shared by the small-cells and the femto-cells,
-  a mixed part 15 shared by the small-cells, the femto-cells and the macro-cells.

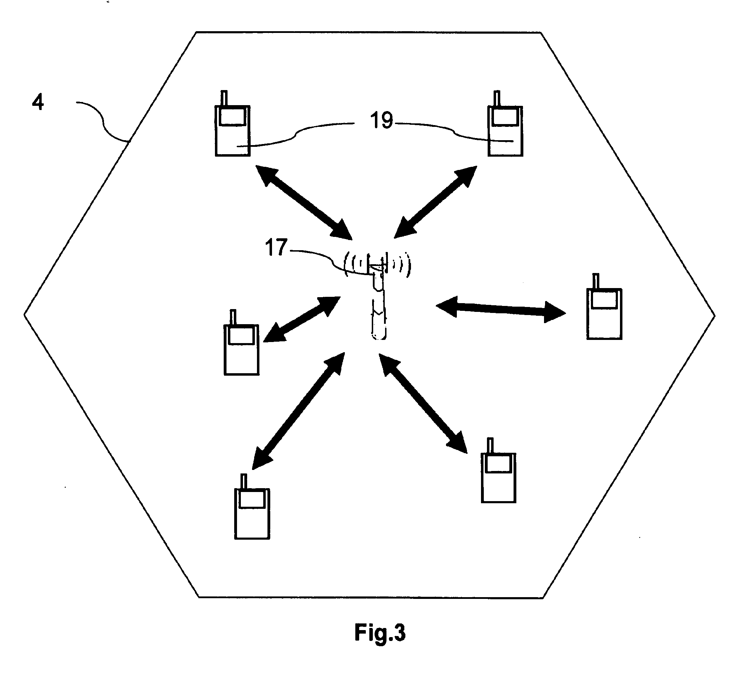

According to the embodiments of the present invention, priority is given to the macro-cell traffic with respect to the micro-cell traffic. The frequency bands corresponding to the micro-exclusive part 13 of the operating spectrum are therefore selected first by the base stations of the micro-cells.
Besides, the method of the present description corresponds to a distributed method which means that each base station determines the frequency bands in which it operates. As a base station is not necessarily aware of the frequency bands currently used by its neighbouring cells, feedback parameters are needed in order to provide selection criteria to the base station. Thus, in the embodiments of the present invention, signal quality measurements achieved by the user equipments and sent to the base station are used as selection criteria. Such signal quality measurements may correspond to signal interference plus noise ration (SINR) measurements. Fig.3 represents a diagram of the organization of a cell 4 (which can be a micro-cell 5 or a macro-cell 3). The base station 17 can communicate with user equipments 19 located in a given covering area (defined as the cell), said user equipments 19 are then defined as attached to the base station 17. According to the embodiments of the present invention, the user equipments 19 located in a cell 4 perform, periodically or on request, signal quality measurements such as interference measurements on a predetermined range of frequencies. Said measurements are then transmitted to the base station 17. Thus, based on these signal quality measurements, the base station 17 can select the frequency bands corresponding to the lowest interference levels. Furthermore, it has to be noted that in the case of small cells which usually correspond to cells managed by an operator and capable of communicating with neighbouring small cells and macro-cells, signal quality measurements may be transmitted by said neighbouring small and macro-cells and thus complete the local measurements.

In order for the base station to adapt to the traffic of the neighbouring cells and in particular the traffic of the macro-cells, the adjustment in the selection of the frequency bands used by the base station is achieved on a double level:

- a first timing scale level comprising the selection of a frequency carrier for a given period and,
- a second timing scale level comprising the selection of frequency blocks inside the selected frequency carrier for a period shorter than the period of the first level.

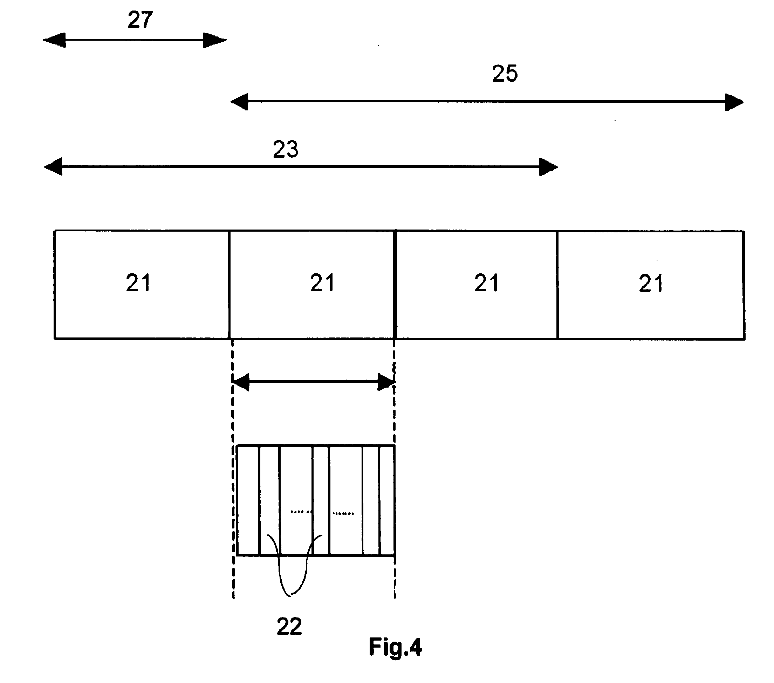

Fig.4 describes an example of frequency carrier distribution along the operating frequency spectrum presented in Fig.2.

The operating frequency spectrum is divided into a plurality (four in the present case) of frequency carriers 21. Some frequency carriers 21 are located in the micro-cell frequency range 23 and some in the macro-cell frequency range 25. As both ranges overlap, some carriers correspond to carriers shared by the micro-cells and the macro-cells (the two central frequency carriers 21 in the present case). In order to give priority to the macro-cell traffic, the frequency carriers 21 corresponding to an exclusive micro-cell frequency range 27 are selected first by the base stations 17 of the micro-cells 5. Nevertheless, if the frequency carriers 21 of the exclusive micro-cell frequency range 27 are occupied by neighbouring micro-cells, the base stations 17 have to select a carrier of the frequency range shared with the macro-cells 3.

Besides, the selected carrier (the second one from the left in the present case) is divided in a plurality of elementary blocks 22 corresponding to a fraction of the bandwidth of the carrier 21. Thus, the second level corresponds to the selection of a predetermined number of elementary blocks 22 among the blocks 22 of the selected carrier.

Moreover, the selection is periodic in order to adapt the size of the bandwidth allocated by the base station 17 in function of the traffic request and in function of the traffic of the neighbouring cells along the time. In the embodiments of the present invention, the periods of the first and the second levels are different. Indeed, the allocation period of the first level corresponds, for example, to the duration between a peak-hour traffic time and an off-hour traffic time whereas the allocation period of the second level corresponds to a much shorter duration in order to provide a dynamic or quasi-dynamic adjustment in the allocation of frequency bands.

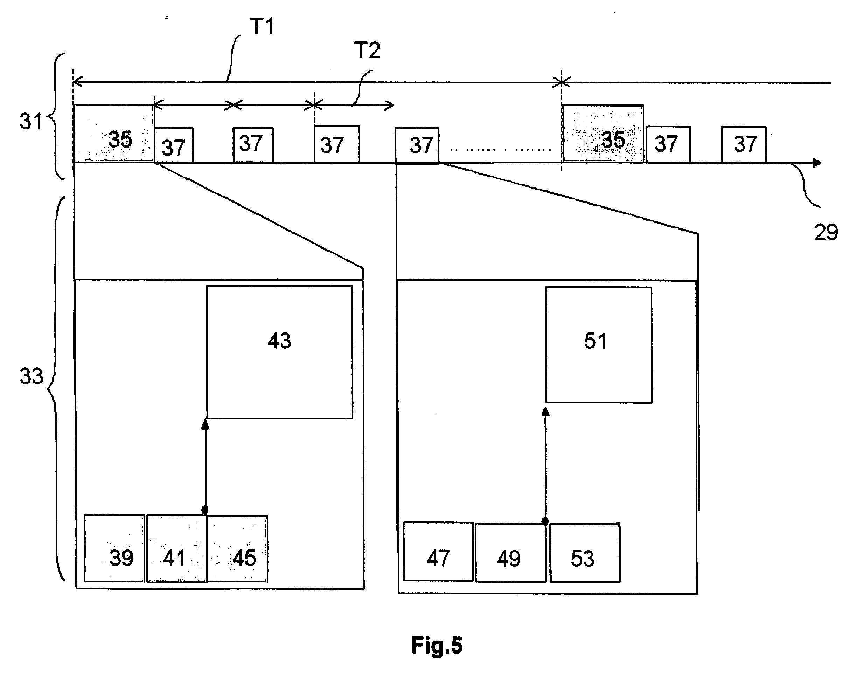

Fig.5 represents the allocation process with the two timing scale levels of selection presented previously. In Fig.5, the upper part 31 represents the occurrence of the selection updates along the time 29 whereas the lower part 33 represents the details of the selection process during a carrier selection update 35 and a blocks selection update 37.

The whole selection process starts with a carrier selection 35. Such start occurs at launching of the base station 17, when the carrier selection period T1 has elapsed or at any time if it is requested by the base station 17, for example in case of signal quality measurements below a given level. In the case of small cells, a carrier selection process may be requested by a neighbouring macro-cell 3 having detected interferences in the area of the small cell.

As described in the lower part 33, said carrier selection comprises different steps:

- a wideband sensing 39 corresponding to the collection of measurements achieved by the attached user equipments 19 in the whole operating bandwidth, said measurements being gathered per carrier band 21.

- a carrier band ranking 41 wherein the carrier band are ranked in function of predetermined parameters, for example the interference level, such selection also takes into account the fact that the carrier band 21 corresponds to the macro-cell frequency range 25.

Two different types of evaluation may be used:

- a first evaluation consists in determining a cost function for each carrier band i of the operating frequency spectrum over the m user equipments attached to the base station and defined as:

$$\text{Cost}_i = w_i \langle I_{i,m} \rangle_m$$

where $w_i$ is a weighting parameter that favours bands of the exclusive micro-cell range 27 and $\langle I_{i,m} \rangle_m$ is the average interference level measured over the m user equipments in the carrier band i. It has also to be noted that the measurement process may use the mean value but also other statistical parameters such as a cumulative distribution function in order to optimize the selection of the frequency bands. The computation of the cost functions leads to the creation of a ranking table 43 comprising the different carrier bands and their associated interference levels ranked in function of their cost function.

- a second evaluation corresponds to a randomized selection process wherein probabilities Pi are defined for each carrier band i and wherein the choice of the band i is based on said probabilities.

The probabilities are defined as:

$$P_i = F(Cost_i) + C_i$$

where $F(Cost_i)$ is a function of the cost function $Cost_i$ described previously, said function F may also integrate measurements reliability, a number of user equipments 19, a number of measurements... and $C_i$ is a cooperation term which takes into account information or measurements sent by neighbouring cells in the case of small cells (this cooperation function does not appear in the femto-cell case). This term corresponds to a probability that the neighbouring cells use the carrier band i and can be positive or negative.

Thus a carrier band i is randomly selected based on the probabilities $P_i$ which minimizes the probability that two cells select at the same time the same carrier band i.

- a carrier band choice 45 wherein a carrier band 21 is selected based on the results of the carrier band ranking step 41.

The selected carrier band is then used for the transmission of the base station 17 during a period T1.

As soon as the carrier band is selected, a blocks selection 37 within the selected carrier band is launched. Said blocks selection also comprises different steps:

- a narrowband sensing 47 corresponding to the collection of measurements achieved by the attached user equipments 19 on the different frequency blocks 22 of the selected carrier bandwidth.

- a blocks ranking 49 wherein the blocks 22 are ranked in function of predetermined parameters, for example a block quality parameter BQ.

Thus, a quality function Q is computed for each block j by the base station with the BQ measurements reported by n user equipments:
$Q_j = x_j <BQ_{j,n}>_n$ where $x_j$ is a weighting parameter that favours blocks being located away from the blocks used by a macro-cell (in the case of an exclusive micro-cell carrier band, this parameter does not appear) and $<BQ_{j,n}>_n$ is the average BQ in the block j over the n user equipments. Said block ranking process 49 leads to the creation of a block ranking table 51. Moreover, as in the carrier selection case, a randomized selection process may be used.

- a blocks choice 53 wherein a predetermined number of blocks are selected based on the results of the blocks ranking step 49. The number of blocks selected is predetermined and may vary in function of the amount of traffic.

The selected carrier blocks are then used for the transmission of the base station 17 during a period T2 which is shorter than the period T1.

As a consequence, at the end of the period T2, a new blocks selection is achieved in order to take into account traffic changes over a small amount of time thus leading to an almost dynamic adaptation to the traffic. Moreover, at each update, the number and/or the size of the blocks may be increased or decreased in function of the traffic request and/or the quality measurements such that in case of good quality measurements (corresponding to a low interference level), the number and/or the size of the frequency blocks 22 may be increased and conversely. However, the number and/or the size of the frequency blocks 22 is increased only if it is required by the traffic request.

Furthermore, an alternate selection process consists in selecting frequency blocks 22 in function of a random hopping sequence. Thus, if three frequency blocks 22 are requested, the first three frequency blocks 22 of the hopping sequence would be selected. Such process is not based on quality measurements and can therefore be used in case of lack of quality measurements (for example in case of failure of the narrow sensing measurement equipment).

Thus, the selection of the frequency band used by the base station 17 for communicating with the attached user equipments comprises two timing scale levels allowing thus a better reactivity to the requested local traffic and to modification of traffic of the neighbouring cells. Moreover, one can imagine a selection with more than two levels, each level corresponding to a different timing scale and/or a different bandwidth scale.

Besides, in case of saturation of the network, the allocation of the frequency blocks 22 may be shared in time such that a base station accesses only part of the time to the selected frequency blocks or to a part of the selected frequency blocks. In practise, the allocation is distributed in time slots and each base station transmits with a fixed probability in each time slot, said probability being updated at each blocks selection in function of quality measurements. In addition, the size of a time slot may be increased or decreased in function of the traffic and/or quality measurements.

Alternatively, the allocation of the time slots to the base stations may also be achieved based on a random hopping sequence.

According to an embodiment of the invention, the network is a long term evolution (LTE) network wherein the block quality parameters (BQ) correspond to Channel Quality Indicator (CQI) and wherein the communication between the base stations of small cells and macro-cells is achieved via X2 interfaces and is managed by a signalling exchange procedure.

The embodiments of the present invention provide therefore a distributed method allowing frequency bands allocation in a mixed network comprising micro-cells 5 and macro-cells 3 wherein the base stations 17

of the micro-cells 5 select autonomously the frequency bands in which they operate based on attached user equipments measurements, said method comprising two frequency and timing levels in order to improve the reactivity of the network to the traffic request leading thus to a reduced interference level and an improved overall quality in the network. Furthermore, the present invention is easy to implement as it only concerns the functioning of the micro-cells base stations.

**Claims**

1. Method for allocating radio resources in a wireless cellular network (1) comprising micro-cells (5) wherein the base stations (17) of the micro-cells (5) select periodically the frequency bands in which they operate, said selection comprising at least two timing scale levels:

   - a first timing scale level wherein, based on signal quality measurements achieved in the whole operating spectrum (7) by at least one user equipment (19), a frequency carrier (21) comprising a plurality of frequency blocks (22) is selected for a period T1,
   - a second timing scale level wherein, based on signal quality measurements achieved in the previously selected frequency carrier (21) by at least one user equipment (19), at least one frequency block (22) within said selected frequency carrier (21) is selected for a period T2 shorter than T1.

2. Method for allocating radio resources in accordance with claim 1 wherein the signal quality measurements comprise interference level measurements.

3. Method for allocating radio resources in accordance with claim 2 wherein the selected frequency bands correspond to the frequency bands having the lowest interference levels.

4. Method for allocating radio resources in accordance with claim 1 or 2 wherein the selection of frequency bands is based on a randomized process using occupation probabilities derived from signal quality measurements.

5. Method for allocating radio resources in accordance with claim 3 or 4 wherein the interference level measurements correspond to Signal to Interference plus Noise Ratio (SINR) measurements.

6. Method for allocating radio resources in accordance with one of the claims from 2 to 5 wherein the selection of the frequency bands is achieved based on the mean value of the interference level measurements.

7. Method for allocating radio resources in accordance with one of the claims from 2 to 5 wherein the selection of the frequency bands is achieved based on the cumulative distribution function of the interference level measurements.

8. Method for allocating radio resources in accordance with one of the previous claims wherein the wireless cellular network (1) also comprises macro-cells (3) and wherein the selection of frequency bands by the base stations (17) of the micro-cells (5) is weighted in order to give priority to macro-cell (3) traffic.

9. Method for allocating radio resources in accordance with one of the previous claims wherein the base station (17) of a micro-cell (5) can communicate with other base stations (17), said communication allowing the exchange of signal quality measurements between the communicating base stations (17).

10. Method for allocating radio resources in accordance with one of the previous claims wherein a new selection process can be triggered in case of performance degradation or in case of request from a neighbouring macro-cell (3).

11. Method for allocating radio resources in accordance with one of the previous claims wherein the size and/or the number of selected frequency blocks vary in function of signal quality measurements and/or traffic request.

12. Method for allocating radio resources in accordance with one of the previous claims wherein, in case of traffic saturation, the allocation of frequency blocks is time shared between neighbouring base stations such that a base station accesses selected frequency blocks only part of the time.

13. Method for allocating radio resources in accordance with one of the previous claims wherein the wireless cellular network (1) is a Long Term Evolution (LTE) network and wherein signal quality measurements comprise Channel Quality Indicator (CQI) measurements.

14. Micro-cell (5) base station (17) comprising means configured for:

   - receiving and collecting signal quality measurements sent by at least one user equipment (19);
   - selecting periodically the frequency bands in which said base station (17) operates, said selection comprising at least two timing scale levels:

- a first timing scale level wherein, based on signal quality measurements achieved in the whole operating spectrum, a frequency carrier (21) comprising a plurality of frequency blocks (22) is selected for a period T1,

- a second timing scale level wherein, based on signal quality measurements achieved in the previously selected frequency carrier (21), at least one frequency block (22) within said selected frequency carrier (21) is selected for a period T2 shorter than T1.

15. Micro-cell (5) base station (17) in accordance with claim 14 wherein it comprises means configured for exchanging information with other neighbouring base stations (17).

16. Micro-cell (5) base station (17) in accordance with claim 14 or 15 wherein said micro-cell (5) base station (17) comprises a X2 interface in order to communicate with other base stations (17) of a Long Term Evolution (LTE) network.

**Patentansprüche**

1. Verfahren zum Zuweisen von Funkressourcen in einem drahtlosen zellularen Netzwerk (1), welches Mikrozellen (5) umfasst, wobei die Basisstationen (17) der Mirozellen (5) periodisch die Frequenzbänder, in denen sie arbeiten, auswählen, wobei das besagte Auswählen mindestens zwei Zeitskala-Ebenen umfasst:

- eine erste Zeitskala-Ebene, wobei, auf der Basis von in dem gesamten Betriebsspektrum (7) durch mindestens ein Benutzergerät (19) durchgeführten Signalqualitätsmessungen, ein Frequenzträger (21) mit einer Mehrzahl von Frequenzblöcken (22) für eine Periode T1 ausgewählt wird;
- eine zweite Zeitskala-Ebene, wobei, auf der Basis von in dem zuvor ausgewählten Frequenzträger (21) durch das mindestens eine Benutzergerät (19) durchgeführten Signalqualitätsmessungen, mindestens eine Frequenzblock (22) in dem besagten ausgewählten Frequenzträger (21) für eine Periode T2, welche kürzer als T1 ist, ausgewählt wird.

2. Verfahren zum Zuweisen von Funkressourcen nach Anspruch 1, wobei die besagten Signalqualitätsmessungen Störpegelmessungen umfassen.

3. Verfahren zum Zuweisen von Funkressourcen nach Anspruch 2, wobei die ausgewählten Frequenzbänder den Frequenzbändern mit den niedrigsten Störpegeln entsprechen.

4. Verfahren zum Zuweisen von Funkressourcen nach Anspruch 1 oder 2, wobei die Auswahl von Frequenzbändern auf einem randomisierten Prozess unter Verwendung von von den besagten Signalqualitätsmessungen abgeleiteten Belegungswahrscheinlichkeiten basiert.

5. Verfahren zum Zuweisen von Funkressourcen nach Anspruch 3 oder 4, wobei die Störpegelmessungen Signal-zu-Interferenz-und-Rausch-Verhältnis- bzw. SINR-Messungen entsprechen.

6. Verfahren zum Zuweisen von Funkressourcen nach Anspruch 2 oder 5, wobei die Auswahl von Frequenzbändern auf der Basis des Mittelwertes der Störpegelmessungen durchgeführt wird.

7. Verfahren zum Zuweisen von Funkressourcen nach Anspruch 2 oder 5, wobei die Auswahl von Frequenzbändern auf der Basis der kumulativen Verteilungsfunktion der Störpegelmessungen durchgeführt wird.

8. Verfahren zum Zuweisen von Funkressourcen nach einem der vorstehenden Ansprüche, wobei das drahtlose zellulare Netzwerk (1) ebenfalls Makrozellen (3) umfasst, und wobei die Auswahl von Frequenzbändern durch die Basisstationen (17) der Mikrozellen (5) gewichtet wird, um dem Verkehr von Makrozellen (3) die Priorität zu gewährleisten.

9. Verfahren zum Zuweisen von Funkressourcen nach einem der vorstehenden Ansprüche, wobei die Basisstation (17) einer Mikrozelle (5) mit anderen Basisstationen (17) kommunizieren kann, wobei das besagte Kommunizieren den Austausch von Signalqualitätsmessgrößen zwischen den kommunizierenden Basisstation (17) ermöglicht.

10. Verfahren zum Zuweisen von Funkressourcen nach einem der vorstehenden Ansprüche, wobei ein neuer Auswahlprozess im Fall einer Leistungsverschlechterung oder im Fall einer Anforderung von einer benachbarten Makrozelle (3) ausgelöst werden kann.

11. Verfahren zum Zuweisen von Funkressourcen nach einem der vorstehenden Ansprüche, wobei die Größe und/oder die Anzahl der ausgewählten Frequenzblöcke in Abhängigkeit der Signalqualitätsmessungen und/oder der Verkehrsanforderung variieren.

12. Verfahren zum Zuweisen von Funkressourcen nach einem der vorstehenden Ansprüche, wobei, im Fall einer Verkehrssättigung, die Zuweisung von Frequenzblöcken zwischen benachbarten Basisstationen zeitlich gemultiplext wird, so dass eine Basisstation nur zeitweise Zugang zu ausgewählten Frequenzblöcken hat.

13. Verfahren zum Zuweisen von Funkressourcen nach einem der vorstehenden Ansprüche, wobei das drahtlose zellulare Netzwerk (1) ein Long Term Evolution- bzw. LTE-Netzwerk ist, und wobei die Signalqualitätsmessungen Kanalqualitätsindikator- bzw. CQI-Messungen umfassen.

14. Basisstation (17) einer Mikrozelle (5) mit Mitteln, die konfiguriert sind für:

- Den Empfang und die Erfassung von von mindestens einem Benutzergerät (19) gesendeten Signalqualitätsmessgrößen;
- das periodische Auswählen der Frequenzbänder, in welchen die besagte Basisstation (17) arbeitet, wobei das besagte Auswählen mindestens zwei Zeitskala-Ebene umfasst:

- eine erste Zeitskala-Ebene, wobei, auf der Basis von in dem gesamten Betriebsspektrum durchgeführten Signalqualitätsmessungen, ein Frequenzträger (21) mit einer Mehrzahl von Frequenzblöcken (22) für eine Periode T1 ausgewählt wird,
- eine zweite Zeitskala-Ebene, wobei, auf der Basis von in dem zuvor ausgewählten Frequenzträger (21) durchgeführten Signalqualitätsmessungen, mindestens eine Frequenzblock (22) innerhalb des besagten ausgewählten Frequenzträgers (21) für eine Periode T2, welcher kürzer als T1 ist, ausgewählt wird T1.

15. Basisstation (17) einer Mikrozelle (5) nach Anspruch 14, umfassend Mittel, die für den Austausch von Informationen mit anderen benachbarten Basisstationen (17) konfiguriert sind.

16. Basisstation (17) einer Mikrozelle (5) nach Anspruch 14 oder 15, wobei die besagte Basisstation (17) der Mikrozelle (5) eine X2-Schnittstelle umfasst, um mit anderen Basisstationen (17) eines Long Term Evolution- bzw. LTE-Netzwerks zu kommunizieren.

**Revendications**

1. Procédé d'allocation de ressources radio dans un réseau sans fil cellulaire (1) comprenant des micro-cellules (5) dans lequel les stations de base (17) des micro-cellules (5) sélectionnent périodiquement les bandes de fréquence dans lesquelles elles fonctionnent, ladite sélection comprenant au moins deux niveaux d'échelle de synchronisation :

- un premier niveau d'échelle de synchronisation dans lequel, en se basant sur des mesures de la qualité du signal obtenues dans l'ensemble du spectre de fonctionnement (7) par au moins un équipement utilisateur (19), une onde porteuse (21) comprenant une pluralité de blocs de fréquences (22) est sélectionnée pour une période T1 ;
- un deuxième niveau d'échelle de synchronisation dans lequel, en se basant sur des mesures de la qualité du signal obtenues dans l'onde porteuse (21) précédemment sélectionnée par au moins un équipement utilisateur (19), au moins un bloc de fréquence (22), à l'intérieur de ladite onde porteuse (21) sélectionnée, est sélectionné pour une période T2 plus courte que T1.

2. Procédé d'allocation de ressources radio selon la revendication 1 dans lequel les mesures de la qualité du signal comprennent des mesures du niveau d'interférence.

3. Procédé d'allocation de ressources radio selon la revendication 2 dans lequel les bandes de fréquence sélectionnées correspondent aux bandes de fréquence présentant les niveaux d'interférence les plus faibles.

4. Procédé d'allocation de ressources radio selon la revendication 1 ou 2 dans lequel la sélection de bandes de fréquence est basée sur un processus aléatoire en utilisant des probabilités d'occupation dérivées de mesures de la qualité du signal.

5. Procédé d'allocation de ressources radio selon la revendication 3 ou 4 dans lequel les mesures du niveau d'interférence correspondent aux mesures du rapport signal sur interférence plus bruit (SINR).

6. Procédé d'allocation de ressources radio selon l'une des revendications 2 à 5 dans lequel la sélection des bandes de fréquence est réalisée en se basant sur la valeur moyenne des mesures du niveau d'interférence.

7. Procédé d'allocation de ressources radio selon l'une des revendications 2 à 5 dans lequel la sélection des bandes de fréquence est réalisée en se basant sur la fonction de distribution cumulative des mesures du niveau d'interférence.

8. Procédé d'allocation de ressources radio selon l'une des revendications précédentes dans lequel le réseau sans fil cellulaire (1) comprend également des macro-cellules (3) et dans lequel la sélection des bandes de fréquence par les stations de base (17) des micro-cellules (5) est pondérée afin de donner la priorité au trafic des macro-cellules (3).

**9.** Procédé d'allocation de ressources radio selon l'une des revendications précédentes dans lequel la station de base (17) d'une micro-cellule (5) peut communiquer avec d'autres stations de base (17), ladite communication permettant l'échange de mesures de la qualité du signal entre les stations de base (17) communiquant.

**10.** Procédé d'allocation de ressources radio selon l'une des revendications précédentes dans lequel un nouveau processus de sélection peut être déclenché en cas de dégradation des performances ou en cas de demande provenant d'une macro-cellule (3) voisine.

**11.** Procédé d'allocation de ressources radio selon l'une des revendications précédentes dans lequel la taille et/ou le nombre de blocs de fréquences sélectionnés varie(nt) en fonction des mesures de la qualité du signal et/ou de la demande de trafic.

**12.** Procédé d'allocation de ressources radio selon l'une des revendications précédentes dans lequel, en cas de saturation du trafic, l'allocation de blocs de fréquences est partagée dans le temps entre des stations de base voisines de sorte qu'une station de base accède à des blocs de fréquence sélectionnés seulement une partie du temps.

**13.** Procédé d'allocation de ressources radio selon l'une des revendications précédentes dans lequel le réseau cellulaire sans fil (1) est un réseau à évolution à long terme (LTE) et dans lequel les mesures de la qualité du signal comprennent des mesures de l'indicateur de qualité du canal (CQI).

**14.** Station de base (17) des micro-cellules (5) comprenant des moyens configurés pour :

- recevoir et collecter des mesures de la qualité du signal envoyées par au moins un équipement utilisateur (19) ;
- sélectionner périodiquement les bandes de fréquence dans lesquelles ladite station de base (17) fonctionne, ladite sélection comprenant au moins deux niveaux d'échelle de synchronisation :

- un premier niveau d'échelle de synchronisation dans lequel, en se basant sur des mesures de la qualité du signal obtenues dans l'ensemble du spectre de fonctionnement, une onde porteuse (21) comprenant une pluralité de blocs de fréquences (22) est sélectionnée pour une période T1,
- un deuxième niveau d'échelle de synchronisation dans lequel, en se basant sur des mesures de la qualité du signal obtenues dans l'onde porteuse (21) précédemment sélectionnée, au moins un bloc de fréquence (22), à l'intérieur de ladite onde porteuse (21) sélectionnée, est sélectionné pour une période T2 plus courte que T1.

**15.** Station de base (17) des micro-cellules (5) selon la revendication 14 comprenant des moyens configurés pour échanger des informations avec d'autres stations de base (17) voisines.

**16.** Station de base (17) des micro-cellules (5) selon la revendication 14 ou 15 dans laquelle ladite station de base (17) des micro-cellules (5) comprend une interface X2 afin de communiquer avec d'autres stations de base (17) d'un réseau à évolution à long terme (LTE).

Fig.1

EP 2 312 880 B1

**Fig.2**

EP 2 312 880 B1

Fig.3

27

25

23

| 21 | 21 | 21 | 21 |

22

**Fig.4**

EP 2 312 880 B1

**Fig.5**

EP 2 312 880 B1

**EP 2 312 880 B1**

**REFERENCES CITED IN THE DESCRIPTION**

**Patent documents cited in the description**

- EP 1786221 A1